# EUROPEAN PATENT APPLICATION

(11) **EP 4 730 119 A1**
(43) Date of publication of application: **22.04.2026**
(21) Application number: 24857987.2
(22) Date of filing: 25.06.2024
(51) Int. Cl.: G06F 9/451

(54) **CROSS-SYSTEM FILE PROCESSING METHOD AND ELECTRONIC DEVICE**

(30) Priority: 26.08.2023 CN 202311090780
(71) Applicant: Huawei Technologies Co., Ltd., Shenzhen, Guangdong 518129 (CN)
(72) Inventor: MA, Li, Shenzhen, Guangdong 518129 (CN); ZHANG, Wei, Shenzhen, Guangdong 518129 (CN); ZHU, Bofan, Shenzhen, Guangdong 518129 (CN)
(74) Representative: Pfenning, Meinig & Partner mbB
(86) International application number: PCT/CN2024/101312
(87) International publication number: WO 2025/044443

(57) **Abstract**

A cross-system file processing method and an electronic device are disclosed. The method includes: When a user recently completes processing on a file in the second system, the electronic device including a first system and a second system can display, on a recently used file display interface provided by the first system, the file recently processed by the user in the second system. When detecting that the user performs a first processing operation on a first file in the second system by using a second application, the electronic device displays, in response to the first processing operation, the first file on a first application interface that corresponds to a first application in the first system. The first application interface is used to display a recently processed historical file.

## Description

This application claims priority to Chinese Patent Application No. 202311090780.9, filed with the China National Intellectual Property Administration on August 26, 2023 and entitled "CROSS-SYSTEM FILE PROCESSING METHOD AND ELECTRONIC DEVICE", which is incorporated herein by reference in its entirety.

### TECHNICAL FIELD

Embodiments of this application relate to the field of electronic technologies, and in particular, to a cross-system file processing method and an electronic device.

### BACKGROUND

Currently, an electronic device such as a mobile phone may provide a function of viewing a recently used file. After a user opens a file such as a picture or a document on the electronic device to browse or edit content, the electronic device may display the file on a recently used interface. Therefore, when the user needs to know a recently used file, the user can directly open the recently used interface on the electronic device to view the file.

However, the function, currently provided by the electronic device, of viewing a recently used file is limited, supports only a simple scenario of a single operating system, and cannot meet a requirement of viewing a recently used file in a complex scenario such as integration of Android^{®} and Windows^{®} dual systems.

### SUMMARY

This application provides a cross-system file processing method and an electronic device. In a scenario of ecosystem convergence of a plurality of operating systems, the electronic device can provide a function of viewing a recently used file across the plurality of operating systems, which improves user experience.

To achieve the foregoing objective, this application uses the following technical solutions.

According to a first aspect, a cross-system file processing method is provided. The method is applied to an electronic device, and the electronic device includes a first system and a second system. The method includes: performing a first processing operation on a first file by using a second application, where the second application belongs to the second system; and after the first processing operation is received, displaying a recently processed historical file on a first application interface, where the recently processed historical file includes the first file, and a first application that corresponds to the first application interface belongs to the first system.

Optionally, the second system may run in a virtual machine or an emulator of the electronic device. For example, the first system may be an Android^{®} operating system or a Harmony^{®} operating system, the second system may be a Windows^{®} operating system or a Linux^{®} operating system, and the second system may run in a PC application engine^{®} of the electronic device. For example, the first system may be a Windows^{®} operating system or a Linux^{®} operating system, the second system may be an Android^{®} operating system or a Harmony^{®} operating system, and the second system may run in a mobile application engine^{®} of the electronic device. Certainly, the first system and the second system may alternatively be other operating systems. This is not specifically limited in this application.

Optionally, the second application is an application installed in the second system. For example, when the second system is a Windows^{®} operating system, the second application may be an office application such as Office^{®} or WPS^{®} of a Windows^{®} version, and is configured to process the first file of a document type. For another example, when the second system is an Android^{®} operating system, the second application may be an image editing application such as Gallery, and is configured to process the first file of an image type. This is not limited in this application.

Optionally, the first file may be an existing file on the electronic device, and the first processing operation may be a processing operation that can change file information of the first file such as a file location, a file attribute, and file content, for example, a saving operation performed after the content of the first file is modified, or a renaming operation on the first file.

Optionally, the first file may alternatively be a new file created on the electronic device, and the first processing operation may be an operation of completing creation of the new file. That is, the user may complete creation of a new first file through a second user. Completing creation may mean creating a file and saving the file.

Optionally, the first application is an application installed in the first system, and may provide a function of viewing a recently processed historical file. In an example, the first application interface of the first application may be used to display the recently processed historical file. The user may operate the electronic device in various manners to enter the first application interface of the first application. For example, when the first system is an Android^{®} operating system, the first application is a Files application, and the first application interface may be a recently used interface. The user may enter the recently used interface through an icon of the Files application displayed on a desktop. For another example, when the first system is a Windows^{®} operating system, the first application is a file resource manager, and the first application interface may be a quick access interface. A list of recently used files is displayed on the quick access interface. The user may enter the quick access interface through an icon of the file resource manager displayed on a desktop, or may enter a menu function interface through a start menu on the desktop. A list of recently used files is displayed on the menu function interface.

According to the solution provided in the first aspect, when detecting that the user performs the first processing operation (for example, an operation of modification and saving) on the first file by using the second application in the second system, the electronic device including the first system and the second system may display, after receiving the first processing operation, the first file on the first application interface (for example, the recently used interface) provided by the first application in the first system. In this way, when the user needs to know the recently used file, the user can view, by directly opening the first application interface that is run and displayed in the first system, a file recently processed in the second system.

In a possible implementation, the first file may include at least one of a picture, a video, audio, and a document. In this way, the user can view, by opening the first application interface that is run and displayed in the first system, various types of files recently processed in the second system.

In a possible implementation, after the first processing operation is received, displaying the recently processed historical file on the first application interface includes: After the first processing operation is received, the second system sends file information of the first file to the first system in response to the first processing operation; the first system updates the file information of the first file to a file database; and the first system updates and displays the recently processed historical file on the first application interface based on an updated file database. In this way, when detecting that the user uses the second application in the second system to perform the first processing operation (for example, an operation of modification and saving) on the first file, the second system may transfer related file information of the first file to the first system, to notify the first system to update the recently processed historical file displayed on the first application interface.

In a possible implementation, the file database may be a media library in the first system. For example, when the first system is an Android^{®} operating system or a Harmony^{®} operating system, after receiving the related file information of the first file transferred by the second system, the first system may actively update the related file information of the first file to the media library. Therefore, when perceiving that the media library is updated, the first application may actively read an updated first file in the media library, and display the updated first file on the first application interface. Optionally, the updated first file may be displayed at the top of all historical files on the first application interface, to represent that the first file is a newly processed file.

In a possible implementation, the file database may be a registry in the first system, or may be a configuration file in the first system. For example, when the first system is an Android^{®} operating system or a Harmony^{®} operating system, after receiving the related file information of the first file transferred by the second system, the first system may actively update the related file information of the first file to the registry or the configuration file in the first system. Therefore, when perceiving that the registry or the configuration file is updated, the first application may actively read an updated first file in the registry or the configuration file, and display the updated first file on the first application interface.

In a possible implementation, the file information of the first file transferred by the second system to the first system may include a file path of the first file, so that the first system can find the first file based on the file path. The file path may include which disk partition and which folder that are on the electronic device and in which the first file is stored, and a file name presented in a final folder, and a file name extension. Optionally, when the first file is displayed on the first application interface, the file path of the first file may also be displayed.

In a possible implementation, the file path of the first file transferred by the second system to the first system may be a file path of the first file in the second system. That the first system updates the file information of the first file to the file database includes: The first system performs path conversion on the file path of the first file in the second system, to obtain a file path of the first file in the first system through conversion; and the first system updates the file path of the first file in the first system to the file database. Paths for storing the first file in different systems are represented differently. Therefore, after receiving the file path, transferred by the second system, of the first file in the second system, the first system may first complete path conversion for the first file, to convert the file path into a file path that can be recognized by the first system. Then, the first system may update, to the file database, the file path of the first file that is obtained after conversion and that can be identified, to complete content update of the first application interface.

Optionally, after the file path is converted into the file path that can be identified by the first system, the first system may verify the file path, to check whether the file path is valid. If the file path is valid, the file path is updated to the file database.

In a possible implementation, the second system includes file monitoring and management, and the first system includes a cross-system file refresh service. That the second system sends the file information of the first file to the first system in response to the first processing operation includes: The second system obtains the file information of the first file by using the file monitoring and management in response to the first processing operation; and the second system sends the file information of the first file to the cross-system file refresh service in the first system. That the first system updates the file information of the first file to the file database includes: The first system updates the file information of the first file to the file database by using the cross-system file refresh service.

It may be understood that due to isolation between different systems, the first system cannot monitor a situation in which the user processes a file in the second system. Consequently, a file recently processed by the user in the second system cannot be displayed on the first application interface in the first system. Therefore, a file monitoring service is added to the second system, so that when the user performs a processing operation on a file in the second system, the file monitoring service can monitor the processing operation in a timely manner, and send monitored related file information of a changed file to the first system.

The recently processed historical file is correspondingly displayed on the first application interface by extracting the file information from the file database in the first system. However, the file database is usually actively refreshed by each application in the first system, and the file database cannot be refreshed by an application in the second system. Therefore, the file update service is added to the first system, so that after the first system receives the related information of the changed file from the second system, the file update service may actively refresh the file database in the first system based on the related information of the changed file in the second system. In this way, after it is perceived that the file database is refreshed, information about the recently processed historical file displayed on the first application interface may be correspondingly refreshed.

In a possible implementation, after displaying the recently processed historical file on the first application interface, where the recently processed historical file includes the first file, the cross-system file processing method further includes: performing a second processing operation on a second file by using a third application, where the third application belongs to the first system; and after the second processing operation is received, displaying a recently processed historical file on the first application interface, where the recently processed historical file includes the first file and the second file.

In this way, when the user performs the second processing operation (for example, an operation of modification and saving) on the second file by using the third application in the first system, the electronic device may also display, in response to the second processing operation, the second file on the first application interface (for example, the recently used interface) provided by the first application in the first system. In this way, when the user needs to know the recently used file, the user can view, by directly opening the first application interface that is run and displayed in the first system, a file recently processed in the second system, or can view a file recently processed in the first system.

Optionally, the first file and the second file may be a same file, that is, the user may process the same file by using applications in different systems. In an example, only information about processing performed by the user on the file in a system in which the user is recently located may be displayed on the first application interface. In another example, information about processing performed by the user on the file in different systems may be separately displayed on the first application interface.

Optionally, the first file and the second file may be different files.

In a possible implementation, after the second processing operation is received, displaying the recently processed historical file on the first application interface includes: After the second processing operation is received, the first system updates file information of the second file to the file database in response to the second processing operation; and the first system updates and displays the second file on the first application interface based on an updated file database, where the first application interface further includes the first file that is previously updated and displayed.

It may be understood that because the user uses the application in the first system to perform the processing operation on the file, the application in the first system may actively refresh the file database when detecting a change in sending of the information about the file. In this way, after it is perceived that the file database is refreshed, the information about the recently processed historical files (including the second file currently processed by the user and the first file previously processed by the user) displayed on the first application interface may be correspondingly refreshed. The file database does not need to be refreshed by using the file refresh service.

In a possible implementation, the first processing operation is an editing processing operation on the first file, and the editing processing operation may include at least one of creation, modification, and saving operations. Optionally, the editing processing operation may also include operations such as file location moving, sharing, and deletion. The editing processing operation is not limited in this application.

In a possible implementation, after displaying the recently processed historical file on the first application interface, where the recently processed historical file includes the first file, the cross-system file processing method further includes: displaying a content interface of the first file by using the second application in response to a trigger operation on the first file on the first application interface; or displaying a content interface of the first file by using the first application in response to a trigger operation on the first file on the first application interface. In this way, the user can also quickly open a corresponding file content interface through a recently processed historical file displayed on the first application interface. Optionally, when the first system does not have an application that has a capability of opening the first file, the electronic device may display the content interface of the first file by starting an application (for example, the second application, or another application in the second system) in the second system. When the first system has the application that has the capability of opening the first file, the electronic device may display the content interface of the first file by starting the application in the first system. A manner in which the electronic device opens the first file is not limited in this application.

According to a second aspect, an electronic device is provided. The electronic device includes a processing module and a display module. The processing module is configured to run a first system and a second system. The processing module is further configured to perform a first processing operation on a first file by using a second application, where the second application belongs to the second system. The display module is configured to: after the first processing operation is received, display a recently processed historical file on a first application interface, where the recently processed historical file includes the first file, and a first application that corresponds to the first application interface belongs to the first system.

In a possible implementation, the first file may include at least one of a picture, a video, audio, and a document.

In a possible implementation, the processing module may be configured to: after the first processing operation is received, send, by the second system, file information of the first file to the first system in response to the first processing operation; update, by the first system, the file information of the first file to a file database; and update and display, by the first system, the recently processed historical file on the first application interface based on an updated file database.

In a possible implementation, the file database may be a media library, a registry, or a configuration file in the first system.

In a possible implementation, the file information of the first file transferred by the second system to the first system may include a file path of the first file.

In a possible implementation, the file path of the first file transferred by the second system to the first system may refer to a file path of the first file in the second system. The processing module may be configured to: perform, by the first system, path conversion on the file path of the first file in the second system, to obtain a file path of the first file in the first system through conversion; and update, by the first system, the file path of the first file in the first system to the file database.

In a possible implementation, the second system includes file monitoring and management, and the first system includes a cross-system file refresh service. The processing module may be configured to: obtain, by the second system, the file information of the first file by using the file monitoring and management in response to the first processing operation; and send, by the second system, the file information of the first file to the cross-system file refresh service in the first system. Updating, by the first system, the file information of the first file to the file database includes: updating, by the first system, the file information of the first file to the file database by using the cross-system file refresh service.

In a possible implementation, the processing module is further configured to perform a second processing operation on a second file by using a third application, where the third application belongs to the first system. Correspondingly, the display module is further configured to: after the second processing operation is received, display a recently processed historical file on the first application interface, where the recently processed historical file includes the first file and the second file.

In a possible implementation, the processing module is further configured to: after the second processing operation is received, update, by the first system, file information of the second file to the file database in response to the second processing operation; and update and display, by the first system, the second file on the first application interface based on an updated file database, where the first application interface further includes the first file that is previously updated and displayed.

In a possible implementation, the first processing operation is an editing processing operation on the first file, and the editing processing operation may include at least one of creation, modification, and saving operations. Optionally, the editing processing operation may also include operations such as file location moving, sharing, and deletion.

In a possible implementation, the display module is further configured to: display a content interface of the first file by using the second application in response to a trigger operation on the first file on the first application interface; or display a content interface of the first file by using the first application in response to a trigger operation on the first file on the first application interface.

According to a third aspect, an electronic device is provided. The electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the cross-system file processing method according to any possible implementation of the first aspect.

According to a fourth aspect, a cross-system file processing apparatus is provided. The apparatus is included in an electronic device, and the apparatus has a function of implementing behavior of the electronic device in the method according to the first aspect and any possible implementation of the first aspect. The function may be implemented by hardware, or may be implemented by hardware executing corresponding software. The hardware or the software includes one or more modules or units corresponding to the foregoing function.

According to a fifth aspect, a chip system is provided. The chip system includes one or more interface circuits and one or more processors. The interface circuit and the processor are interconnected through a line. The interface circuit is configured to: receive a signal from a memory of the electronic device, and send the signal to the processor. The signal includes computer instructions stored in the memory. When the processor executes the computer instructions, the electronic device performs the cross-system file processing method according to any possible implementation of the first aspect. The chip system may include a chip, or may include a chip and another discrete component.

According to a sixth aspect, a computer-readable storage medium is provided. The computer-readable storage medium stores computer program instructions. When the computer instructions are run on an electronic device, the electronic device is enabled to perform the cross-system file processing method according to any possible implementation of the first aspect.

According to a seventh aspect, a computer program product including instructions is provided. When the computer program product runs on an electronic device, the electronic device is enabled to implement the cross-system file processing method according to any possible implementation of the first aspect.

It may be understood that for beneficial effects that can be achieved by the electronic device according to the second aspect, the electronic device according to the third aspect, the apparatus according to the fourth aspect, the chip system according to the fifth aspect, the computer storage medium according to the sixth aspect, and the computer program product according to the seventh aspect, refer to the beneficial effects of the first aspect and any possible implementation of the first aspect. Details are not described herein again.

### BRIEF DESCRIPTION OF DRAWINGS

FIG. 1(a), FIG. 1(b), and FIG. 1(c) are an interface diagram 1 of an electronic device according to an embodiment of this application;
FIG. 2 is a diagram of an implementation architecture of a recently used interface according to an embodiment of this application;
FIG. 3(a), FIG. 3(b), FIG. 3(c), FIG. 3(d), FIG. 3(e), and FIG. 3(f) are an interface diagram 2 of an electronic device according to an embodiment of this application;
FIG. 4 is a diagram of a hardware structure of an electronic device according to an embodiment of this application;
FIG. 5 is a diagram of a software structure of an operating system according to an embodiment of this application;
FIG. 6 is a schematic flowchart of a cross-system file processing method according to an embodiment of this application;
FIG. 7(a), FIG. 7(b), and FIG. 7(c) are an interface diagram 3 of an electronic device according to an embodiment of this application; and
FIG. 8(a) and FIG. 8(b) are an interface diagram 4 of an electronic device according to an embodiment of this application.

### DESCRIPTION OF EMBODIMENTS

The following describes the technical solutions in embodiments of this application with reference to the accompanying drawings in embodiments of this application. The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. It should be understood that in this application, "at least one" means one or more, and "a plurality of" means two or more. The term "and/or" is used for describing an association relationship between associated objects, and indicates that three relationships may exist. For example, "A and/or B" may indicate the following three cases: Only A exists, only B exists, and both A and B exist, where A and B may be singular or plural.

Currently, there are various types of electronic devices, and different types of electronic devices may be equipped with different operating systems. The electronic device may run, based on an operating system with which the electronic device is equipped, an application matching the operating system.

For example, when the electronic device is a personal computer (personal computer, PC) (such as a desktop computer or a notebook computer), the electronic device may be equipped with a Windows^{®} operating system or a Linux^{®} operating system, and correspondingly run an application in a format of an executable file (that is, an application whose file name extension is ".exe") or run a Linux application. When the electronic device is a mobile phone or a tablet computer, the electronic device may be equipped with an Android operating system or an iOS^{®} operating system, and correspondingly run an Android application or an iOS^{®} application.

Because running mechanisms of an application in different operating systems are different from each other, there are barriers in communication and interaction between different operating systems, and it is difficult to implement simple and effective coordination and interface convergence in many aspects. Therefore, usually, an application in an operating system A cannot be installed or run in an operating system B. For example, an application in the Android operating system cannot be directly installed or run in the Windows^{®} operating system.

Currently, running, on a notebook computer equipped with the Windows^{®} operating system, an application in the Android operating system may be implemented by using a technology such as a virtual machine (virtual machine) or a virtualization (virtualization) technology, for example, by using a technology such as an Android emulator (simulator) or an Android container (container). In this case, the notebook computer may be referred to as a host machine, and a native operating system (the Windows^{®} operating system) with which the notebook computer is equipped is referred to as a host operating system (Host OS). Another operating system running in an emulator, a container, or the like on the host machine may be referred to as a guest operating system (Guest OS). In this case, the guest operating system may run on the host machine, and the host machine virtualizes, for the emulator, the container, or the like, a virtual hardware environment (including a processor, a memory, an I/O device, and the like) independent of actual hardware, so that for the guest operating system, running in the virtual hardware environment on the host machine is not different from running in the actual hardware.

Because there are barriers in communication and interaction between different operating systems, the guest operating system located in the emulator, the container, or the like is isolated from the host operating system of the host machine. Therefore, the guest operating system and the host operating system use applications in their own systems to browse and process a file.

Currently, an operating system such as Android^{®} or Harmony^{®} (Harmony^{®}) may provide a function of viewing a recently used file. After a user opens a file such as a picture or a document by using an application in an operating system to browse or edit content, a Files application in the operating system may display the file on a recently used interface for the user to easily view a recently used file.

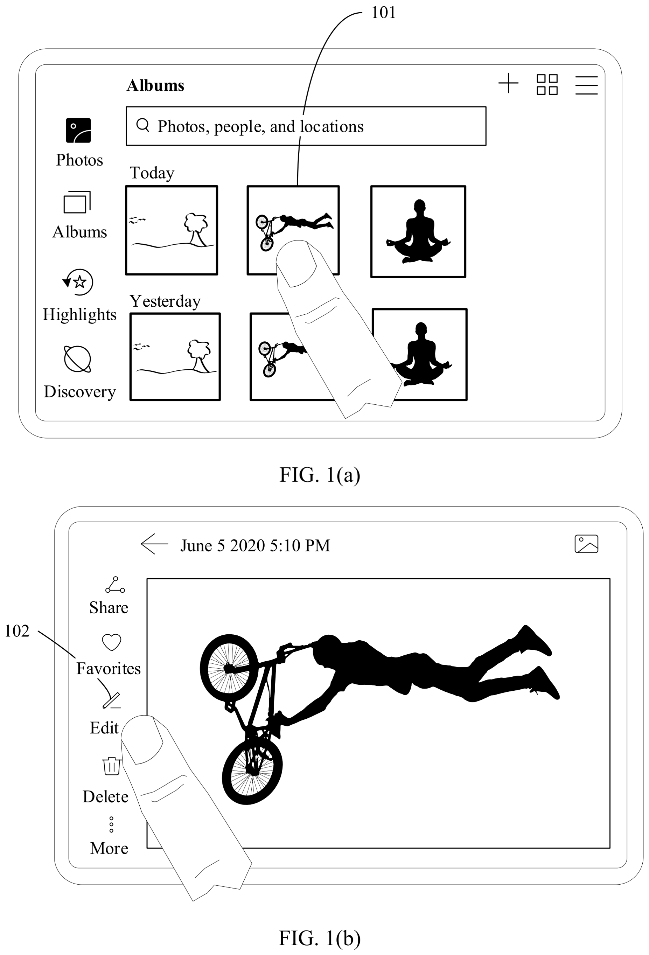

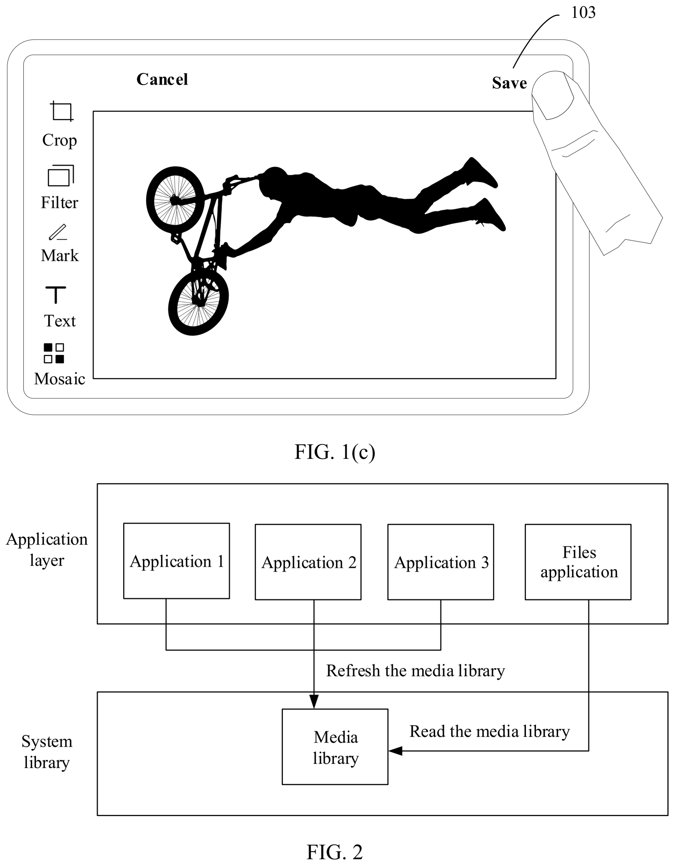

For example, an example in which a tablet computer is equipped with the Android operating system is used. After opening, on the tablet computer, an application interface of an Album application shown in FIG. 1(a), the user may edit one of a plurality of pictures displayed on the application interface of the Album application. For example, after the user performs a tapping operation on a picture 101 on the application interface of the Album application shown in FIG. 1(a), the tablet computer displays a picture display interface shown in FIG. 1(b). The user may tap an editing control 102 provided on the picture display interface, to enter a picture editing interface shown in FIG. 1(c). When the user implements a series of editing operations on the picture 101 by using each editing tool control provided on the picture editing interface, the user may save the edited picture 101 by tapping a saving control 103 displayed in an upper right corner of the picture editing interface. In addition, the tablet computer displays the edited picture 101 on a recently used interface for the user to easily view.

Optionally, as shown in FIG. 2, in the Android operating system, after the user uses an Android application in the system to create a new file and save the file or edit an existing file and save the file, a corresponding Android application actively refreshes a media library. After detecting a refresh of the media library, a Files application in the Android operating system may read the media library based on a specific policy, to display, on a recently used interface of the Files application, the newly created file saved by the user or the file edited and saved by the user.

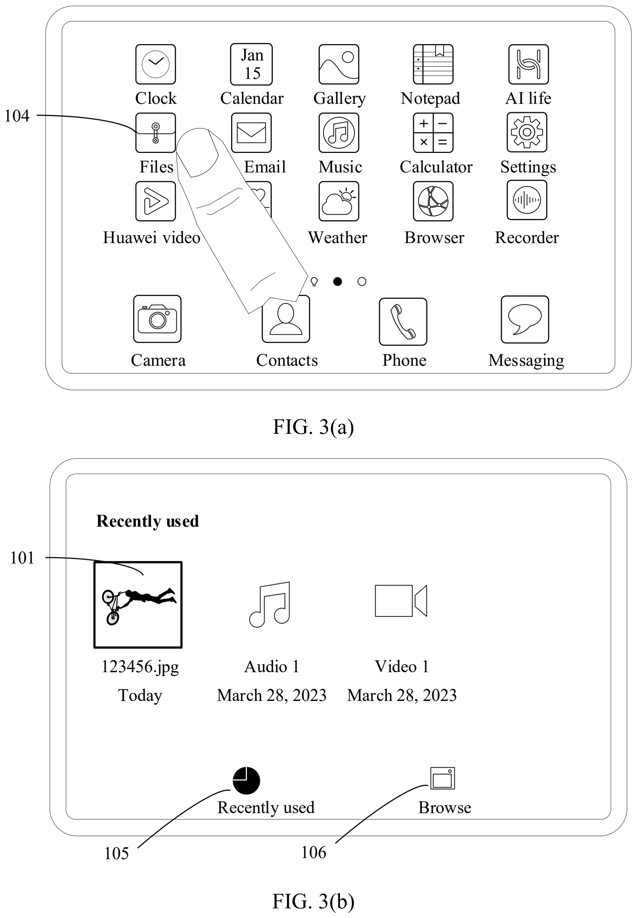

When the user needs to view a recently used file, the user may perform, on a desktop shown in FIG. 3(a), a tapping operation on an application icon 104 of the Files application, to enter a file management interface shown in FIG. 3(b). The file management interface may include a recently used control 105 configured to display a recently used file, and a browse control 106 configured to browse all files in the tablet computer.

Optionally, when the user taps the recently used control 105, the tablet computer may display a recently used interface on the file management interface, as shown in FIG. 3(b). The recently used interface is used to display the recently used file, for example, the recently edited picture 101. Optionally, when the tablet computer enters the file management interface, it may be recommended that the recently used interface be displayed on the file management interface by default, and the user does not need to tap the recently used control 105 to trigger the display of the recently used interface.

However, the foregoing function of viewing a recently used file is limited to a single-system scenario such as the Android operating system. For an electronic device in which the guest operating system (such as the Windows^{®} operating system or the Linux^{®} operating system) runs and that uses the Android operating system (that is, the host operating system), because there are barriers in communication and interaction between different operating systems, the application in the guest operating system cannot refresh the media library in the Android operating system (that is, the host operating system). Therefore, in a scenario of ecosystem convergence of a plurality of operating systems, only a file recently used by the user in the Android operating system (that is, the host operating system) can be displayed on the recently used interface, and the user cannot conveniently find, from the recently used interface, a file recently used in the guest operating system. This results in poor user experience.

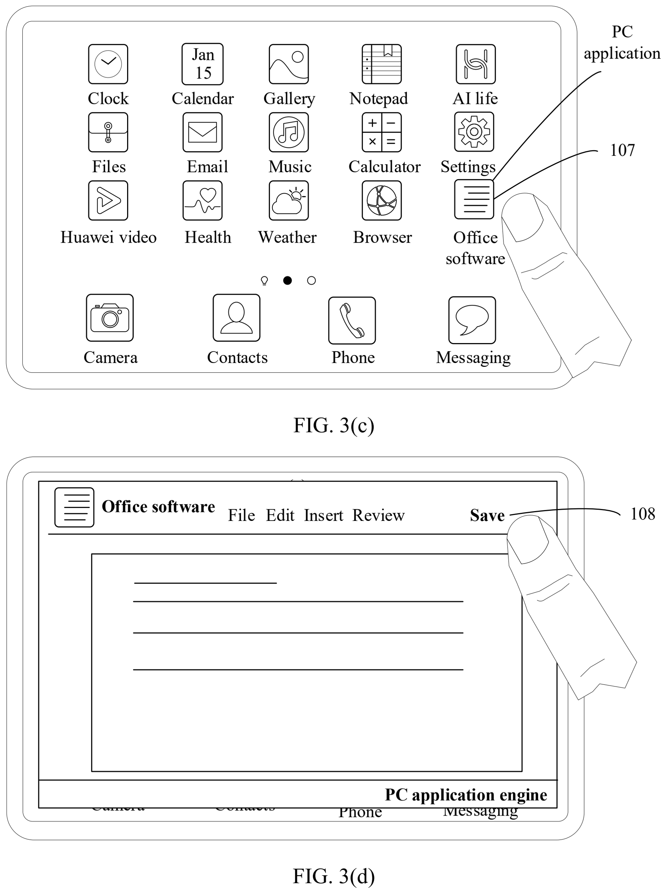

For example, an example in which the tablet computer is equipped with the Android operating system and the Windows^{®} operating system is used. As shown in FIG. 3(c), when receiving a tapping operation performed by the user to start an office software application 107 on a PC side, the tablet computer may display, by using a PC application engine, a document editing page of office software shown in FIG. 3(d). After the user performs, on the document editing page, a series of editing operations such as adding, deletion, and moving of content, and taps a saving control 108 in an upper right corner shown in FIG. 3(d), the tablet computer may save the edited document.

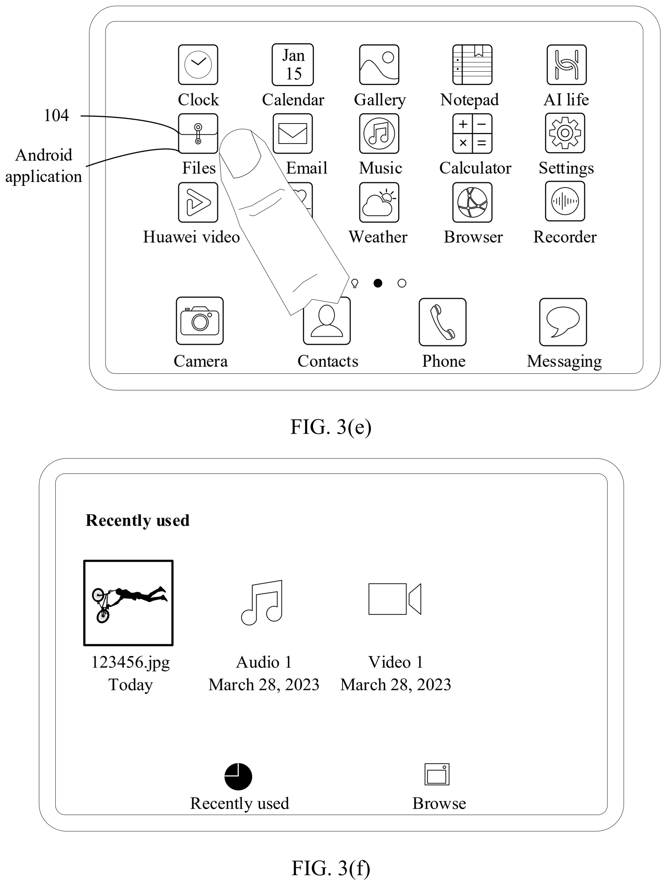

The user edits and saves a document by using the office software application on the PC side, the office software application on the PC side is an application in the Windows^{®} operating system, and the Android operating system cannot monitor a change in the document. Therefore, a historical file recently processed by the user by using the office software application on the PC side cannot be displayed on a recently used interface running in the Android operating system. Therefore, when the user needs to view the recently used file, the user may perform, on the desktop shown in FIG. 3(e), a tapping operation on the application icon 104 of the Files application in the Android operating system, to enter a file management interface shown in FIG. 3(f). Information about the document processed by the user by using the office software application on the PC side is not displayed in the recently used file displayed on the file management interface.

To resolve the foregoing problem, embodiments of this application provide a cross-system file processing method, so that file monitoring and management can be added to the guest operating system, and a communication mechanism between the guest operating system and the Android operating system can be added. Therefore, when detecting that a file saving action is performed in the application in the guest operating system, the file monitoring and management notifies the Android operating system (that is, the host operating system) side to trigger a refresh of the media library. Therefore, after detecting that a refresh of the media library, the Files application in the Android operating system (that is, the host operating system) may read the media library based on a specific policy, to display, on a recently used interface of the Files application, a newly created file saved by the user or a file edited and saved by the user in the guest operating system. In this way, when the user needs to know the recently used file, the user can directly open the recently used interface to view the file. In this case, the user can conveniently find, on the recently used interface, a file recently used in the Android operating system (that is, the host operating system), and can also conveniently find a file recently used in the guest operating system.

The cross-system file processing method provided in embodiments of this application is mainly based on a virtual machine (for example, an emulator or a container) running on the electronic device. The virtual machine may provide a running environment independent of a native operating system (that is, the host operating system) of the electronic device. The electronic device may run, in the virtual machine based on the running environment provided by the virtual machine, an operating system (that is, the guest operating system) that is different from the native operating system of the electronic device, to provide application running experience that is different from that provided by the native operating system. For example, although the Android operating system on the electronic device cannot run an application on a computer side, the electronic device can run the application on the computer side based on the running environment provided by the virtual machine.

In some embodiments, emulator (Emulator) software may be installed on the electronic device. By using the installed emulator software, the electronic device can provide a running environment independent of the native operating system of the electronic device, and implement the cross-system file processing method provided in embodiments of this application. The emulator software is not limited in embodiments of this application.

In an example, when the host operating system is the Android operating system, a PC emulator may be installed in the Android operating system, to run, in the Android operating system, a Windows^{®} operating system or a Linux^{®} operating system (that is, the guest operating system) of a PC. In this way, the user directly runs PC application software on a mobile phone or a tablet computer, to meet a more complex office requirement that cannot be implemented by an Android application.

The electronic device in this application may include but is not limited to an electronic device such as a smartphone, a netbook, a tablet computer, a personal computer (personal computer, PC) (such as a desktop computer or a notebook computer), a palmtop computer, a vehicle-mounted device, a wearable device (such as a smartwatch, a smart band, or smart glasses), a smart television, a projection device, a smart screen device, an augmented reality (augmented reality, AR)/virtual reality (virtual reality, VR) device, or a mixed reality (mixed reality, MR) device. A specific function and structure of the electronic device are not limited in this application.

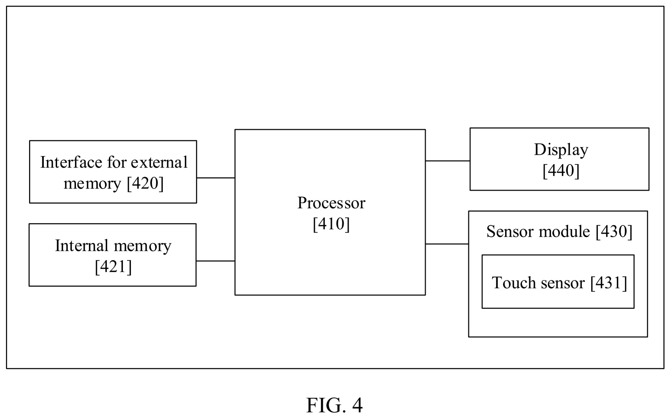

In an example, FIG. 4 is a diagram of a hardware structure of an electronic device according to an embodiment of this application. As shown in FIG. 3, the electronic device may include a processor (for example, a central processing unit (central processing unit, CPU)) 410, memories (including an interface 420 for external memory and an internal memory 421), a sensor module 430, a display 440, and the like. The sensor module 430 may include a touch sensor 431. Optionally, the sensor module 430 may further include a pressure sensor, an acceleration sensor, a distance sensor, an optical proximity sensor, a fingerprint sensor, a temperature sensor, an ambient light sensor, a bone conduction sensor, and the like.

It may be understood that the structure illustrated in this embodiment of the present invention does not constitute a specific limitation on the electronic device. In some other embodiments of this application, the electronic device may include more or fewer components than those shown in the figure, or a combination of some components, or splits from some components, or a different component layout. The components shown in the figure may be implemented by hardware, software, or a combination of software and hardware. For example, the electronic device may further include a universal serial bus (universal serial bus, USB) interface, a charging management module, a power management module, a battery, an antenna, a mobile communication module, a wireless communication module, a speaker, a receiver, a microphone, a headset jack, a button, a motor, an indicator, a camera, and the like.

The processor 410 may include one or more processing units. For example, the processor 410 may include an application processor (application processor, AP), a modem processor, a graphics processing unit (graphics processing unit, GPU), an image signal processor (image signal processor, ISP), a flight controller, a video codec, a digital signal processor (digital signal processor, DSP), a baseband processor, a neural-network processing unit (neural-network processing unit, NPU), and/or. Different processing units may be independent devices, or may be integrated into one or more processors.

A memory may be disposed in the processor 410, and is configured to store instructions and data. In some embodiments, the memory in the processor 410 is a cache. The memory may store instructions or data that has just been used or is cyclically used by the processor 410. If the processor 410 needs to use the instructions or data again, the processor 410 may directly invoke the instructions or data from the memory. This avoids repeated access, reduces waiting time of the processor 410, and improves system efficiency.

In some embodiments, the processor 410 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The 12C interface is a bidirectional synchronization serial bus, and includes a serial data line (serial data line, SDA) and a serial clock line (serial clock line, SCL). In some embodiments, the processor 410 may include a plurality of groups of I2C buses. The processor 410 may be coupled to the touch sensor 431 through the I2C interface, so that the processor 410 communicates with the touch sensor 431 through the I2C bus interface, to implement a touch function of the electronic device.

In this embodiment of this application, the processor 410 may obtain, through the I2C bus interface, a tapping operation that is performed by the user on a saving control and that is detected by the touch sensor 431, to respond to the tapping operation and perform the cross-system file processing method in embodiments of this application.

The touch sensor 431 is also referred to as a "touch panel". The touch sensor 431 may be disposed on the display 440, and the touch sensor 431 and the display 440 constitute a touchscreen, which is also referred to as a "touchscreen". The touch sensor 431 is configured to detect a touch operation performed on or near the touch sensor 431. The touch sensor may transfer a detected touch operation (including information such as a touch location, touch strength, a contact area, and touch duration) to the processor, to determine a touch event type. A visual output related to the touch operation may be provided through the display 440. In some other embodiments, the touch sensor 431 may also be disposed on a surface of the electronic device at a location different from that of the display 440.

In embodiments of this application, the touch operation detected by the touch sensor 431 may be an operation performed by the user on or near the touchscreen by using a finger, or may be an operation of the user on or near the touchscreen by using a stylus, a touch stylus, a touch ball, or another touch auxiliary tool. This is not limited in this application.

The interface 420 for external memory may be configured to connect an external storage card, for example, a micro SD card, to expand a storage capability of the electronic device. The external storage card communicates with the processor 410 through the interface 420 for external memory, to implement a data storage function.

The internal memory 421 may be configured to store computer-executable program code. For example, a computer program may include an operating system program and an application. The operating system may include but is not limited to an operating system such as Symbian^{®} (Symbian^{®}), Android^{®} (Android^{®}), Microsoft^{®} Windows^{®}, Apple (iOS^{®}), Blackberry^{®} (Blackberry^{®}), or Harmony^{®} (Harmony^{®}). The executable program code includes instructions. The processor 410 runs instructions stored in the internal memory 421, to perform various function applications and data processing of the electronic device. The internal memory 421 may include a program storage area and a data storage area. The program storage area may store an operating system, an application required by at least one function, and the like. The data storage area may store data (such as an input event and file information) created when the electronic device is used, and the like. In addition, the internal memory 421 may include a high-speed random access memory, or may include a nonvolatile memory, for example, at least one magnetic disk storage device, a flash memory, or a universal flash storage (universal flash storage, UFS). The processor 410 runs the instructions stored in the internal memory 421 and/or instructions stored in the memory disposed in the processor, to perform various function applications of the electronic device and data processing.

In this embodiment of this application, the electronic device may implement a display function through the GPU, the display 440, the application processor, and the like. The GPU is a microprocessor for image processing, and is connected to the display 440 and the application processor. The GPU is configured to: perform mathematical and geometric computation, and draw and render graphics. The processor 410 may include one or more GPUs that execute program instructions to generate or change display information.

In this embodiment of this application, the electronic device may be responsible for completing drawing and rendering of a first application interface by using a virtual GPU in a guest operating system running in a virtual machine. A first application corresponding to the first application interface belongs to the guest operating system.

The display 440 is configured to display interfaces such as image and video interfaces. The display 440 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device may include one or N displays 440, where N is a positive integer greater than 1.

In this embodiment of this application, the electronic device may display, through the display 440, an application interface (for example, the first application interface) that is of the operating system running in the virtual machine and that is responsible for drawing and rendering. Alternatively, the electronic device may display, through the display 440, an application interface (for example, a second application interface) that is of the native operating system of the electronic device and that is responsible for drawing and rendering.

All methods in the following embodiments may be implemented in the electronic device having the foregoing hardware structure.

In embodiments of this application, the electronic device may be referred to as a host machine. A native operating system installed in the electronic device may be referred to as a host operating system (Host OS), and the electronic device may further load a guest operating system on top of the host operating system. Optionally, an operating system with which the electronic device can be equipped may include but is not limited to a common operating system such as a Windows^{®} operating system, a macOS^{®} operating system, a Harmony^{®} operating system, a Linux^{®} operating system, an Android^{®} operating system, or an iOS^{®} operating system. The host operating system may be any one of the operating systems, and the guest operating system may be any one of the operating systems. The host operating system may be the same as or may be different from the guest operating system. The host operating system and the guest operating system with which the electronic device is equipped are not limited in embodiments of this application.

In this embodiment of this application, the guest operating system may run in the host operating system in a form such as an emulator or a virtual machine. The host operating system virtualizes, for the guest operating system, a virtual hardware environment (including a processor, a memory, an I/O device, and the like) independent of actual hardware, so that for the guest operating system, running in the virtual hardware environment in the host operating system is no different from running in the actual hardware. In this way, the electronic device may provide a virtual operating system running environment in the host operating system, to run application software of another operating system in the host operating system.

Usually, an application in the guest operating system cannot be directly installed or run in the host operating system. For example, an application (an Android^{®} application) on a mobile phone side or a tablet computer side cannot be directly installed or run in the Windows^{®} operating system of a PC. In this case, the application on the mobile phone side can be installed or run in the Windows^{®} operating system of the PC in a "simulation" or "virtualization" manner. For another example, an application (such as a Linux^{®} application) on a PC side cannot be directly installed or run in an Android^{®} operating system of a mobile phone or a tablet computer. In this case, the application on the PC side can also be installed and run in the Android^{®} operating system of the mobile phone or tablet computer in a "simulation" or "virtualization" manner.

The following describes a software architecture of an electronic device by using an example in which a host operating system is an Android^{®} operating system and a guest operating system is a Linux^{®} operating system.

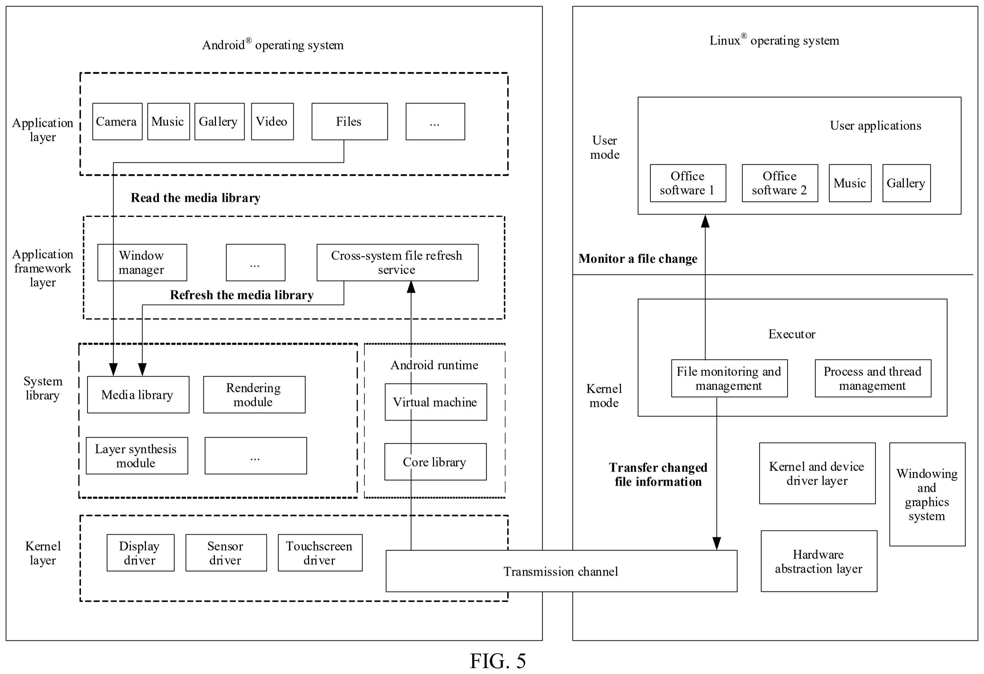

As shown in FIG. 5, the Android^{®} operating system may include an application layer, an application framework layer (framework, FWK), a system library, an Android runtime, and a kernel layer.

The application layer may include a series of application packages such as Camera, Gallery, Music, and Video applications. For ease of description, an application is briefly described as an application below. The application may be a native application (for example, an application integrated in the operating system), or may be a third-party application (for example, an application downloaded and installed by a user from an application store). This is not limited in embodiments of this application. In this embodiment of this application, the application layer may include a Files application, configured to manage files such as a picture, music, a video, and a document that are stored on the electronic device.

In some embodiments, the Files application may provide a function of viewing a recently used file.

Optionally, in an ecosystem convergence scenario, the application layer also includes emulator software, for example, a PC application engine^{®}, configured to implement cross-system display. In this embodiment of this application, the emulator may run a plurality of tasks in the Linux^{®} operating system, and the emulator may render an interface of a running task, and apply to the Android^{®} operating system for a display window of the interface. Interface data is sent to the Linux^{®} operating system, to implement an objective of cross-system displaying, by using the Android^{®} operating system, of an interface that corresponds to the foregoing task running in the Linux^{®} operating system.

The application framework layer provides an application programming interface (application programming interface, API) and a programming framework for an application at the application layer. In this embodiment of this application, as shown in FIG. 5, the application framework layer includes a cross-system file refresh service (FileService), which is configured to: receive changed file information transferred by the guest operating system, and actively refresh a media library based on the received file information. After detecting a refresh of the media library, the Files application at the application layer may actively read the media library based on a specific policy, to display a changed file on a recently used interface of the Files application.

In some scenarios, manners of implementing the function of viewing a recently used file in different operating systems may be different. For example, when the host operating system is a Windows^{®} operating system, a file resource manager may display a recently used interface, and the file resource manager may read information about a recently used file from a registry or a configuration file. In this case, the Windows^{®} operating system may alternatively include the cross-system file refresh service (FileService), which is configured to actively refresh the registry or the configuration file after receiving the changed file information transferred by the guest operating system, so that the file resource manager correspondingly refreshes the recently used interface after perceiving that the registry or the configuration file is refreshed.

In some embodiments, the application layer may include an agent software program that can autonomously execute a task and interact with another intelligent agent software program and environment, for example, a shell agent application or an agent application. The agent software program is equivalent to a common application in the Android^{®} operating system, and may be configured to trigger active refreshing of the media library based on a recently used file in the guest operating system (that is, the Linux^{®} operating system). The agent software program may include FileService.

Optionally, the application framework layer may further include a window manager (window manager), an activity manager (activity manager), a content provider (content provider), a view system (view system), a telephony manager (telephony manager), a resource manager (resource manager), a notification manager (notification manager), and the like. This is not limited in embodiments of this application.

The window manager (also referred to as a window management service (window management service, WMS)) carries data and an attribute related to an "interface", and is used for management of a status related to the "interface", for example, is used for window program management and event dispatching. Window program management includes a sequential output to a physical screen or another display device based on a display request of an application under assistance of an application server and the WMS. Event dispatching means dispatching a user event from a keyboard, a physical button, a touchscreen, a mouse, or the like to a corresponding control or window. The window management service may also obtain a size of a display, determine whether there is a status bar, perform screen locking, take a screenshot, and the like. In embodiments of this application, window program management is further configured to sequentially complete rendering of an interface based on a display request of an application under assistance of the application server and the WMS.

The activity manager (also referred to as an activity management service (activity management service, AMS)) is configured to be responsible for managing an activity, and be responsible for a work such as startup, switching, and scheduling of each component in a system, and management and scheduling of an application. The view system may be configured to construct a display interface of an application. The view system includes visual controls, such as button (Button) controls like a saving control.

The system library and Android runtime include a functional function that needs to be invoked by the application framework layer. The Android runtime includes a core library and a virtual machine. The system library may include a plurality of functional modules. For example, as shown in FIG. 5, the system library includes a media library (Media Store), a rendering module, and a layer synthesis module. The media library supports playback and recording in a plurality of commonly used audio and video formats, static image files, and the like. The rendering module is configured to perform layer drawing and rendering on an interface. The layer synthesis module is configured to synthesize layers of an interface. For specific descriptions of the system library, refer to a conventional technology.

After detecting that a user performs a processing operation such as creation, editing, or saving on a file, a file editing application (such as Gallery or Album) in the Android^{®} operating system actively refreshes, into the media library, a file path of the file processed by the user. Then, the Files application in the Android^{®} operating system may detect a refresh of the media library, and read the media library based on a specific policy and display the file path of the file processed by the user on the recently used interface.

In this embodiment of this application, after receiving the changed file information transferred by the guest operating system, FileService in the Android^{®} operating system also actively refreshes the media library based on the received file information.

The kernel layer is a layer between hardware and software. For example, the kernel layer may include a display driver, a sensor driver, an input/output device driver (for example, a keyboard driver, a touchscreen driver, or a microphone driver), a camera driver, an audio driver (for example, a headset driver or a speaker driver), a wireless driver, a USB driver, a Bluetooth driver, and the like.

As shown in FIG. 5, the Linux^{®} operating system is of a layered architecture, and is mainly divided into a kernel mode and a user mode. The user mode includes user applications (user applications), including a series of applications, such as office software 1, office software 2, Camera, Gallery, Music, and Video. The kernel mode includes a hardware abstraction layer (hardware abstraction layer, HAL), a kernel and device driver (device driver) layer, an executor, and a windowing and graphics system (windowing and graphics system).

The hardware abstraction layer enables the Linux^{®} operating system to be ported to various hardware platforms. The hardware abstraction layer is a loadable kernel module that can provide a unified service interface for different hardware platforms.

A kernel (namely, a Linux^{®} kernel) at the kernel and device driver layer includes a group of low-level operating system functions, such as thread scheduling, interrupt and exception distribution, and multiprocessor synchronization. A device driver (namely, a device driver) at the kernel and device driver layer is mainly used for a user thread that initiates an I/O request. The device drivers are classified into a hardware device driver, a file system driver, a file system filter driver, a network redirection driver, a protocol driver, a kernel loss filter driver, and the like.

The executor includes basic operating system services, such as memory management, process and thread management, security management, I/O management, network and cross-process communication management, power management, configuration management, driver management, and object management. In this embodiment of this application, the executor may include file monitoring and management, configured to monitor a change in a file in the Linux^{®} operating system, for example, opening, closing, moving/renaming, deletion, creation, or changing an attribute.

In this embodiment of this application, after the user creates a file and saves the file, or edits an existing file and saves the file by using an application in the Linux^{®} operating system, the file monitoring and management may listen to a change in the file, and transfer related information of the changed file to the cross-system file refresh service in the Android^{®} operating system through a communication mechanism between the Linux^{®} operating system and the Android^{®} operating system. The related information of the file may include a path address of the file.

Optionally, the file monitoring and management may be a file monitoring mechanism of the kernel in the Linux^{®} operating system, for example, Inotify, which may monitor a file change in the Linux^{®} operating system. For example, when the user creates, edits, or saves a file by using an application in the Linux^{®} operating system, Inotify may listen to the file creation, editing, and saving operations. In this embodiment of this application, when listening to an action such as creating, editing, or saving of the file, Inotify may obtain file information (for example, a file path) of the corresponding file, and notify FileService in the Android^{®} operating system of the file information through the communication mechanism between the Linux^{®} operating system and the Android^{®} operating system. After obtaining the file information, FileService actively refreshes the media library in the Android^{®} operating system.

In some embodiments, the file monitoring and management may also be arranged in the user mode. Arrangement of the file monitoring and management in the Linux^{®} operating system is not limited in this application.

Optionally, the executor may further include an inter-system communication component, configured to be responsible for communication between operating systems in the ecosystem convergence scenario, implementing a cross-system display feature, and the like. For example, in an emulator scenario, the cross-system communication component, for example, a PC application engine^{®} component, configured to be responsible for implementing a feature specific to the PC application engine^{®}, communication between the host operating system and the guest operating system, and the like.

The windowing and graphics system is mainly configured to implement a graphical user interface (graphical user interface, GUI) function, for example, process a window, generate a user interface control in a window, and draw an interface layer in a window.

Usually, an application on the GUI needs to open a window (namely, the display window). A typical window includes a plurality of components, such as a title bar, a menu bar, and a main display area. The title bar may include an application icon and/or a window title. The main display area is used to place a function control and interface content of the window. In embodiments of this application, the windowing and graphics system may be configured to support the electronic device in displaying, through the display window, an interface (for example, including a small window interface such as a floating interface or a picture-in-picture interface) of a task running across systems.

It may be understood that the architecture shown in FIG. 5 in this application does not constitute a specific limitation on the host operating system and the guest operating system, and is determined by a specific operating system. For specific software architectures of the Android^{®} operating system and the Windows^{®} operating system, refer to a conventional technology. This application is merely used as an example.

The following specifically describes a cross-system file processing method provided in an embodiment of this application by using an example in which a guest operating system is a second system and a host operating system is a first system.

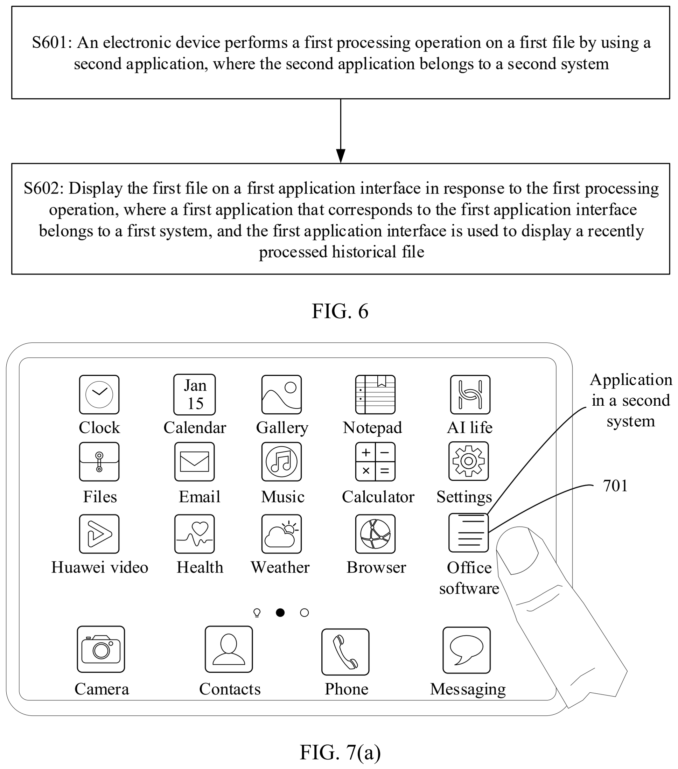

As shown in FIG. 6, the cross-system file processing method provided in this embodiment of this application may include S601 and S602.

S601: An electronic device performs a first processing operation on a first file by using a second application, where the second application belongs to the second system.

In this embodiment of this application, the first system is installed on the electronic device, and the first system may be referred to as the host operating system. The electronic device may further load the second system on top of the first system by using an emulator or a container, and the second system may be referred to as the guest operating system.

Optionally, an operating system with which the electronic device can be equipped may include but is not limited to a common operating system such as a Windows^{®} operating system, a macOS^{®} operating system, a Harmony^{®} operating system, a Linux^{®} operating system, an Android^{®} operating system, or an iOS^{®} operating system. The first system may be any one of the operating systems, and the second system may be any one of the operating systems. The first system may be the same as or may be different from the second system. The first system and the second system with which the electronic device is equipped are not limited in embodiments of this application.

In this embodiment of this application, a first application may be installed and run in the first system, and the second application may be installed and run in the second system. The first application can provide a function of viewing a recently processed historical file for a user. The second application can provide a file processing function for the user.

Optionally, the first file may be a multimedia file such as a picture, audio, a video, a document, a compressed package, or a folder. A type of the file is not limited in embodiments of this application. The first processing operation performed on the first file may be an editing processing operation on the first file. The editing processing operation may include creation, editing, saving, moving/renaming, changing an attribute, or the like. The editing processing operation is not limited in embodiments of this application.

In this embodiment of this application, when the user needs to process a file, the user may process the file by using the second application in the second system. Herein, the file processed by the second application in the second system may be defined as the first file.

In an implementation, the electronic device may display a second application interface, and the second application interface may be used to present a to-be-processed first file. The second application interface may be a file browsing interface used to display at least one file (including the first file) that can be processed by the second application. The file browsing interface may be a main interface of the second application, or may be another page of the second application. The user may perform, on the second application interface, the first processing operation on the first file.

As an example, when the second system is a Windows^{®} operating system, the second application may be an office application that can run in the Windows^{®} operating system and that is of an Office^{®} PC version, a WPS^{®} PC version, or the like, and the second application interface may be a file browsing interface of the Office^{®} PC version, a file browsing interface of the WPS^{®} PC version, or the like.

Optionally, when the second system is a Windows^{®} operating system, the second application may alternatively be a file viewing application used to view or edit a multimedia file such as a picture, audio, or a video. A type of the second application is not limited in embodiments of this application.

In another example, when the second system is an Android^{®} operating system, the second application may be an application used to view or edit a picture or a video, or a multimedia editing application used to view or edit audio or a video. A type of the second application is not limited in embodiments of this application.

Optionally, when receiving a trigger operation of starting the second application by the user, the electronic device may display the second application interface that corresponds to the second application.

Optionally, when the electronic device displays the second application interface that corresponds to the second application, the second application interface may not include the first file. The second application interface may provide a function control for creating a new file. When tapping the function control on the second application interface, the user may create a new file and save the file on the second application interface. The new file may be the first file.

Optionally, the trigger operation may be a tapping operation performed, on a related icon or control of the second application, by the user on a desktop in the second system, or may be another operation such as a voice instruction operation, an instruction input operation, or a preset gesture operation of the user. This is not limited in embodiments of this application.

Optionally, the trigger operation may be input by the user through touching, or may be input by using an input device (such as a mouse, a keyboard, or a microphone). This is not limited in embodiments of this application.

In an example, the second application interface of the second application may include an option control that corresponds to the first file. The option control is configured to indicate the electronic device to open the first file. When displaying the second application interface of the second application under control of the user, if receiving a tapping operation performed by the user on the option control that corresponds to the first file, the electronic device may display a content interface of the first file in response to the tapping operation.

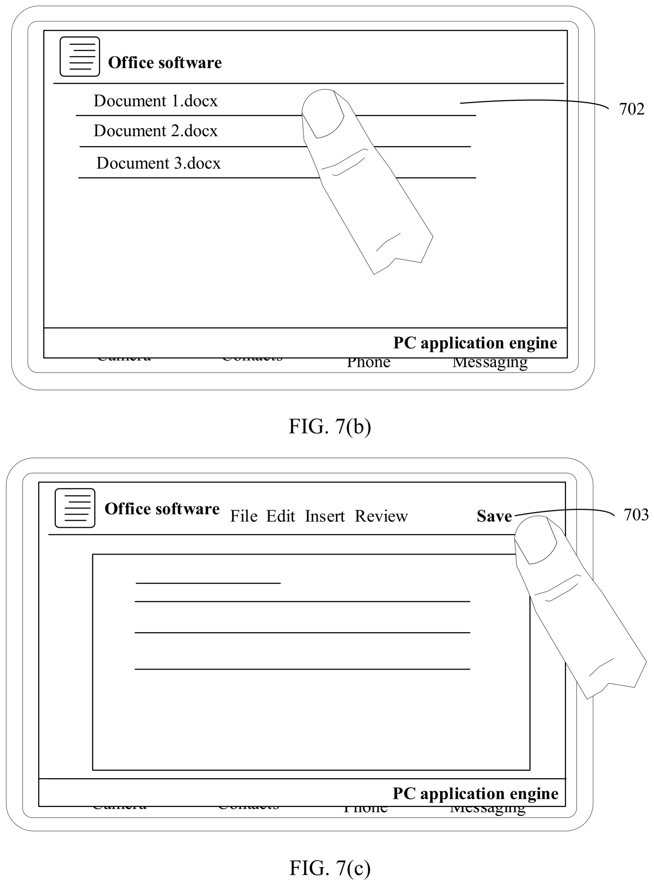

For example, as shown in FIG. 7(a), when receiving a tapping operation of starting an office software application 701 on a PC side by the user, a tablet computer may display a file browsing interface of the office software shown in FIG. 7(b). The file browsing interface may display at least one document file on the tablet computer. The first file may be a document 1.

In an example, the second application interface of the second application may also include a file creation control, and the creation control is configured to indicate the electronic device to create a new file. When displaying the second application interface of the second application under control of the user, if receiving a tapping operation performed by the user on the file creation control, the electronic device may display a content interface of the newly created file (for example, the newly created first file) in response to the tapping operation. Optionally, the electronic device may also display an option control of the newly created file (for example, the newly created first file) in response to the tapping operation. If receiving the tapping operation performed by the user on the option control of the newly created file (for example, the newly created first file), the electronic device may display the content interface of the newly created file (for example, the newly created first file) in response to the tapping operation.

Optionally, the first processing operation performed by the user on the first file on the second application interface may be a saving operation performed after the first file is opened, and an editing operation such as adding, deletion, modification, or moving is performed on file content. Optionally, the first processing operation performed by the user on the first file on the second application interface may alternatively be a saving operation performed after the first file is created.

It may be understood that the saving operation may indicate to the electronic device that the user has confirmed a file information change caused by the foregoing editing performed on the first file. In this embodiment of this application, the electronic device may perform the cross-system file processing method in this application after detecting the saving operation performed by the user on the file.

In some embodiments, the first processing operation performed on the first file by using the second application may alternatively be a sharing operation on the first file. The electronic device may perform the cross-system file processing method in this application after detecting the sharing operation performed by the user on the file.

In an example, the sharing operation may be sharing the first file with another user by using an instant messaging application. For example, in at least one document displayed on an application interface of the WPS^{®} PC version on the tablet computer, the user may touch and hold the option control of the first file such as the document 1, to display various sharing functions for the document 1. For example, when the user taps sharing to WeChat^{®}, a WeChat^{®} application of the PC version may be started and a WeChat chat interface of the user may be displayed in the Windows^{®} operating system, so that the user can select a chat object for sharing. In this case, the Windows^{®} operating system may detect the sharing operation on the first file, so that the cross-system file processing method in this application can be performed.

In an example, the user may also share the first file with another user on a chat interface of the instant messaging application by triggering a file sharing function. For example, when the user triggers an image sharing function on the chat interface, the Windows^{®} operating system may call the second application (such as a file resource manager) to display at least one to-be-shared file (including the first file). After the user chooses to share the first file, the Windows^{®} operating system may detect the sharing operation on the first file, so that the cross-system file processing method in this application can be performed.

It may be understood that the first processing operation is merely an example, and a specific manner of the first processing operation is not limited in embodiments of this application.

S602: Display the first file on a first application interface in response to the first processing operation, where the first application that corresponds to the first application interface belongs to the first system, and the first application interface is used to display the recently processed historical file.

In this embodiment of this application, the first application may be installed and run in the first system. The first application can provide a function of viewing a recently processed file. Herein, an interface that is of the first application and that is used to display a recently processed file is defined as the first application interface.

In an example, when the first system is the Android^{®} operating system, the first application may be a Files application, and the first application interface may be the recently used interface of the Files application as shown in FIG. 3(b).

In another example, when the first system is the Windows^{®} operating system, the first application may be a file resource manager, and the first application interface may be a quick access interface of the file resource manager.

Optionally, when the first system is the Windows^{®} operating system, the first application may be a menu application, and the first application interface may be an interface of a recently used card on a menu interface, or the like. A type of the first application is not limited in embodiments of this application.

When the user performs the first processing operation on the first file by using the second application, information about the first file is changed. In this case, the second system may monitor the changed first file, and transfer the file information of the first file to the first system through a communication mechanism between the first system and the second system. The first system may display the first file on the first application interface of the first application based on the received file information of the changed first file. This allows the user to know, on the first application interface in the first system, information about the file recently used by the user in the second system.

The file information of the first file may include a file path. The file path may be which disk partition and which folder (directory) that are on the electronic device and in which the file is located, a final name of the file, and a file type and a file name extension, for example: C/dum/document 1.docx. Optionally, the file information of the first file may also include other information such as a file type and a modification date. This is not limited in embodiments of this application.

In an example, the first processing operation may be an operation of editing and saving the first file. In this way, after the user uses the second application in the second system to edit and save the first file, the second system may monitor the first file whose content is changed, and transfer the file information of the first file to the first system through the communication mechanism between the first system and the second system. The first system may display the first file on the first application interface of the first application based on the received file information of the changed first file. This allows the user to know, on the first application interface in the first system, information about the file recently edited by the user in the second system.

For example, as shown in FIG. 7(b), after the user taps an option control 702 of the document 1 (the first file) on the file browsing interface of the office software, the tablet computer may open the document 1, and display an editing page of the document 1 shown in FIG. 7(c). After the user performs, on the editing page, a series of editing operations such as adding, deletion, and moving of content, and taps a saving control 703 in an upper right corner shown in FIG. 7(c), the tablet computer may save the edited document 1.

In this case, the Windows^{®} operating system (the second system) running by the tablet computer by using a virtual machine or an emulator may transfer, to the Android^{®} operating system through a communication mechanism between the Windows^{®} operating system and the Android^{®} operating system, a file path of the document 1 whose content is changed. Therefore, the Files application in the Android^{®} operating system may display, on the recently used interface, the document 1 that is recently edited by the user in the Windows^{®} operating system.

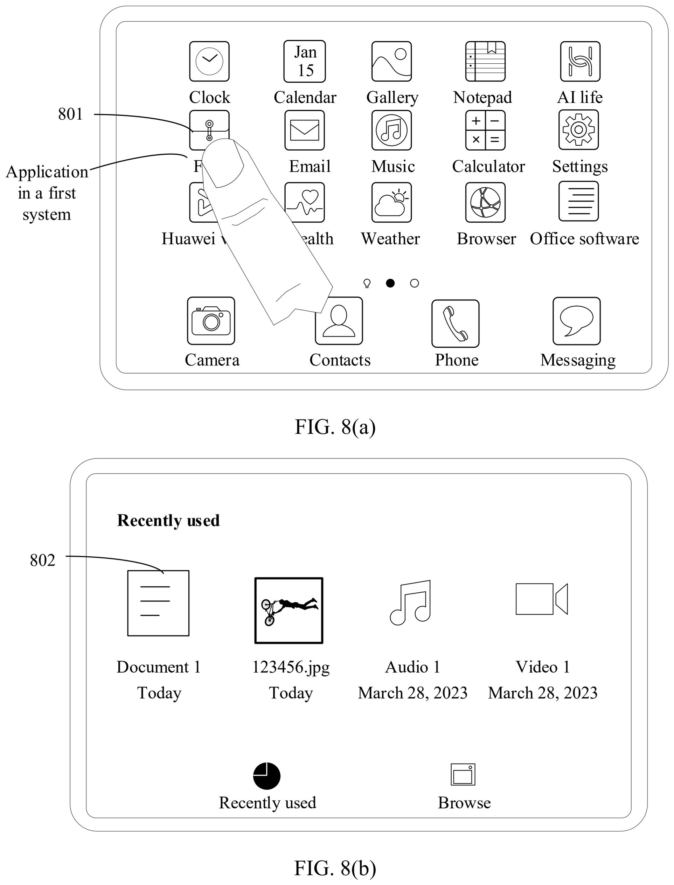

For example, when the user needs to view a recently used file, the user may perform, on a desktop shown in FIG. 8(a), a tapping operation on an application icon 801 of the Files application, to enter a file management interface shown in FIG. 8(b). The file management interface may include a recently used interface configured to display the recently used file. For example, a document 1 802 edited by the user by using an office software application on the PC side is displayed.

In another example, the first processing operation may be the sharing operation on the first file. In this way, when sharing the first file with another device or another user in the second application in the second system, the user may know, on the first application interface in the first system, file information recently shared by the user in the second system.

In another example, the first processing operation may be an editing operation such as adding, deletion, modification, or moving on the first file. In this way, after the user edits the first file in the second application in the second system, regardless of whether edited content is saved, the user may also know, on the first application interface in the first system, file information recently edited by the user in the second system.

Optionally, the first processing operation may be input by the user through touching, or may be input by using an input device (such as a mouse, a keyboard, or a microphone). This is not limited in embodiments of this application.

In a scenario, file monitoring and management that can monitor a change in file information in real time is added to the second system. For example, the file monitoring and management may be implemented through Inotify (a Linux kernel mechanism). Inotify may monitor creation, editing, saving, and the like of a file in the second system in real time. Therefore, after detecting the saving operation performed by the user on the first file, Inotify may transfer a file path of the first file to the first system through the communication mechanism, to update the file path of the first file to a media library in the first system. Implementation of the file monitoring and management is not limited in embodiments of this application.

Optionally, a message transmission channel, such as a socket or a pipe, used for cross-system communication may be established between the first system and the second system of the electronic device. Therefore, the second system running in the emulator or container may send the changed file information over the message transmission channel.

Optionally, after detecting the first processing operation performed by the user on the first file, the file monitoring and management may first determine whether a file type of the first file is a preset type. The preset type is a file type that can be displayed on the first application interface.

An example in which a list of files only of an office document type is displayed on the first application interface is used. After detecting the first processing operation performed by the user on the first file, the file monitoring module may first determine whether the type of the first file is the document type. If the type of the first file is the document type, the file monitoring and management may transfer the file path of the first file to the first system through the communication mechanism. If the type of the first file is not the document type, the file monitoring and management may ignore the operation and does not transfer the file information.

In some scenarios, when the first processing operation is the sharing operation on the first file, Inotify may not monitor the sharing operation performed by the user on the first file. Therefore, sharing monitoring and management that can monitor the sharing operation performed by the user on the file may alternatively be added in the second system. When the sharing action performed by the user on the first file is detected, the file path of the first file may be transferred to the first system through the communication mechanism, to update the file path of the first file to the media library in the first system. Implementation of the sharing monitoring and management is not limited in embodiments of this application.

A cross-system file refresh service may be added in the first system, and is configured to: receive the file path of the first file transferred by the second system, and actively refresh the media library based on the received file path of the first file, to update the changed first file to the media library. The cross-system file refresh service may be an agent application that is in the first system and that can autonomously execute a task and interact with another agent application and environment, for example, an agent application and a shell agent application.

It may be understood that an objective of the agent application is to achieve a specific goal. In this embodiment of this application, a goal of the agent application is to listen to information about a file transferred by the second system, and actively refresh the media library.

Optionally, the cross-system file refresh service may also be another application in the first system, for example, a system service. The cross-system file refresh service in the first system is not limited in embodiments of this application.

In this embodiment of this application, the first application in the first system may perceive an update of the media library, and when perceiving the update of the media library, actively read updated file information in the media library, and refresh content on the first application interface based on the updated file information. That is, the changed first file is displayed on the first application interface.

In some embodiments, file paths of the first file in different systems are represented differently. Therefore, after receiving the file path of the first file, the cross-system file refresh service may first perform path conversion, to convert the file path of the first file in the second system into a file path of the first file in the first system, and then refresh the file path of the first file in the first system into the media library.

Optionally, before refreshing the file path of the first file in the first system into the media library, the cross-system file refresh service may also check validity of the file. When the file path that is obtained after conversion and that is of the first file in the first system is invalid, if the first file cannot be found in the file path, the cross-system file refresh service may stop refreshing the file path of the first file in the first system into the media library. Therefore, the file path of the first file in the first system can be refreshed into the media library only when it is determined that the file path of the first file is valid.

Optionally, a system library in the first system may store a path conversion mapping table. When the cross-system file refresh service receives the file path of the first file transferred by the second system, the file path that is obtained after conversion and that is of the first file in the first system may be determined based on the path conversion mapping table.

In some scenarios, different systems may implement the function of viewing a recently processed file in different manners. Therefore, the recently processed file displayed on the first application interface may not be implemented by reading the media library.

In an example, when the first system is an operating system such as the Android^{®} operating system, the Harmony^{®} operating system, or the iOS^{®} operating system, the file information in the media library may be read to refresh and display the recently processed file.

In another example, when the first system is a system such as the Windows^{®} operating system or the Linux^{®} operating system, a registry in the first system may alternatively be read to refresh and display the recently processed file. In this case, after detecting the saving operation performed by the user on the first file, Inotify may transfer the file path of the first file to the first system through the communication mechanism, to update the file path of the first file to the registry in the first system. The cross-system file refresh service in the first system may receive the file path of the first file transferred by a second cross-system file, and actively refresh the registry based on the received file path of the first file, to update the changed first file to the registry. In this way, when perceiving an update of the registry, the first application in the first system actively reads updated file information in the registry, and refreshes content on the first application interface based on the updated file information. That is, the changed first file is displayed on the first application interface.

In another example, when the first system is a system such as the Windows^{®} operating system or the Linux^{®} operating system, a configuration file in the first system may alternatively be read to refresh and display the recently processed file. In this case, after detecting the saving operation performed by the user on the first file, Inotify may transfer the file path of the first file to the first system through the communication mechanism, to update the file path of the first file to the configuration file in the first system. The cross-system file refresh service in the first system may receive the file path of the first file transferred by a second cross-system file, and actively refresh the configuration file based on the received file path of the first file, to update the changed first file to the configuration file. In this way, when perceiving an update of the configuration file, the first application in the first system actively reads updated file information in the configuration file, and refreshes content on the first application interface based on the updated file information. That is, the changed first file is displayed on the first application interface.

In this embodiment of this application, such a media library, a registry, a configuration file, or the like that can store file change information may be defined as a file database. Presentation forms of the file database are not limited in embodiments of this application. The file database may alternatively be another resource library that can store file change information.

In some scenarios, the user can alternatively quickly open a file from recently used files.

Optionally, the user may perform a trigger operation on the first file on the first application interface. Therefore, the electronic device may quickly display the content interface of the first file in response to the trigger operation.

Optionally, the electronic device may quickly display the content interface of the first file by using the second application in the second system in response to the trigger operation. In this way, when the user taps a file on the recently used interface, the electronic device may open a content interface of the file by using an application previously used by the user to process the file.

Optionally, the electronic device may alternatively quickly display the content interface of the first file by using the first application in the first system in response to the trigger operation. For example, when the user taps a file on the recently used interface of the Files application, the electronic device may open a content interface of the file by using the Files application.

Optionally, the electronic device may open, in response to the trigger operation, the content interface of the first file by using another application that is in the first system and that can view or edit the first file.

When the electronic device cannot view or edit the first file by using an application in the first system, the electronic device may alternatively open, in response to the trigger operation on the first file by the user on the second application interface, the content interface of the first file by using an application that is in the second system and that can view or edit the first file.

Optionally, the electronic device may alternatively provide, in response to the trigger operation, an option of at least one application that can view or edit the first file, allowing the user to choose which application to open the content interface of the first file. The at least one application may include an application in the first system, or may include an application in the second system. This is not limited in this application.

In some scenarios, in addition to a file recently processed by the user in the second system, the recently processed file displayed on the first application interface further includes a file recently processed by the user in the first system.

In an example, a third application may be installed and run in the first system. When the user performs a second processing operation on a file by using the third application, the electronic device may also display the file on the first application interface in response to the second processing operation. Herein, the file processed by the third application in the first system may be defined as a second file.

Optionally, the second file may be a multimedia file such as a picture, audio, a video, a document, a compressed package, or a folder. A type of the second file is not limited in embodiments of this application. The second processing operation on the second file may be creating, editing, saving, moving/renaming, changing an attribute, or the like. A manner of the second processing operation is not limited in embodiments of this application. The second file may be the same as or may be different from the first file.

In an implementation, the electronic device may display a third application interface, and the third application interface may be used to present a to-be-processed second file. The third application interface may be a file browsing interface used to display at least one file (including the second file) that can be processed by the third application. The file browsing interface may be a main interface of the third application, or may be another page of the third application. The user may perform, on the third application interface, the second processing operation on the second file.

In an example, when the first system is the Android^{®} operating system, the third application may be an application, such as Album or Gallery, used to view or edit a picture or a video. The third application interface may be a picture management interface, a video management interface, or the like of an application such as Album or Gallery. In an example, the third application may alternatively be a multimedia editing application used to view or edit audio or a video. The third application interface may be a picture management interface, a video management interface, or the like.

Optionally, when receiving a trigger operation of starting the third application by the user, for example, a tapping operation performed by the user on an application icon of the third application on a desktop in the first system, the electronic device may display the third application interface that corresponds to the third application.

Optionally, when the electronic device displays the third application interface that corresponds to the third application, the third application interface may include at least one to-be-processed file (including the second file). Optionally, the third application interface may not include a file, to wait for the user to create and save a file.

In an example, the third application interface that corresponds to the third application may include an option control that corresponds to the second file. The option control is configured to indicate the electronic device to open the second file. When displaying the third application interface of the third application under control of the user, if receiving a tapping operation performed by the user on the option control that corresponds to the second file, the electronic device may display a content interface of the second file in response to the tapping operation.

Optionally, the second processing operation performed by the user on the second file on the third application interface may be a saving operation performed after the first file is opened, and an editing operation such as adding, deletion, modification, or moving is performed on file content. Optionally, the second processing operation performed by the user on the second file on the third application interface may alternatively be a saving operation performed after the second file is created. In some embodiments, the second processing operation performed on the second file by using the third application may alternatively be a sharing operation on the second file.

In some embodiments, when the user performs the second processing operation on the second file by using the third application, the information about the second file is changed. In this case, the third application may actively refresh the media library in the first system. After detecting a refresh of the media library, the first application in the first system may read the media library based on a specific policy, to display the changed second file on the first application interface. Therefore, the second file recently used by the user in the first system and the first file recently used by the user in the second system can both be displayed on the first application interface.

In some embodiments, a file recently used by the user in the first system and a file recently used by the user in the second system may be displayed on the first application interface in a differentiated manner. For example, the first application interface may be divided into a first display area and a second display area. The file recently used by the user in the first system is displayed in the first display area, and the file recently used by the user in the second system is displayed in the second display area.

According to the cross-system file processing method provided in embodiments of this application, in addition to a native host operating system (a first system), a virtual machine runs on an electronic device. A guest operating system (a second system) runs on the virtual machine. When a user creates, edits, or saves a file in the guest operating system, the electronic device may send, by using the virtual machine, a file path of the file used by the user in the guest operating system to the native host operating system, to trigger a refresh of a media library in the host operating system. Then, a related application in the host operating system may read, from the media library, the file path of the file recently used by the user in the guest operating system, so that the file can be displayed on a recently used interface. In this way, when the user needs to know the recently used file, the user can directly open the recently used interface to view the file. In this case, the user can conveniently find, on the recently used interface, a file recently used in the native host operating system, and can also conveniently find the file recently used in the guest operating system.

In some scenarios, when the guest operating system (the second system) also provides a function of viewing a recently processed historical file, file change information in the host operating system (the first system) may also be synchronized to the guest operating system (the second system), to display, on a recently used interface running in the guest operating system (the second system), the file recently used by the user in the host operating system (the first system).

For example, when the user creates, edits, or saves a file in the host operating system (the first system), the electronic device may send, by using the virtual machine, a file path of the file used by the user in the guest operating system to the guest operating system, to trigger a refresh of a media library in the guest operating system. Then, a related application (a Files application) in the guest operating system may read, from the media library, the file path of the file recently used by the user in the host operating system, so that the file can be displayed on a recently used interface. In this way, when the user needs to know the recently used file, the user can directly open the recently used interface in the guest operating system to view the file. In this case, the user can conveniently find, on the recently used interface, a file recently used in the guest operating system, and can also conveniently find the file recently used in the host operating system.

It may be understood that, to implement the foregoing functions, the electronic device includes corresponding hardware and/or software modules for performing the functions. Algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. During actual implementation, there may be another division manner.

It should be noted that all related content of the steps in the foregoing method embodiments may be cited in function description of corresponding functional modules. Details are not described herein again.

Some other embodiments of this application further provide a cross-system file processing apparatus. The apparatus may be used in the foregoing electronic device. The apparatus is configured to perform functions or steps performed by the electronic device in the foregoing method embodiments.

An embodiment of this application further provides a chip system. The chip system includes at least one processor and at least one interface circuit. The processor and the interface circuit may be interconnected through a line. The interface circuit may read instructions stored in the memory, and send the instructions to the processor. When the instructions are executed by the processor, the cross-system file processing apparatus and the electronic device may be enabled to perform the functions or steps in the foregoing method embodiments.

An embodiment of this application further provides a computer storage medium. The computer storage medium includes computer instructions. When the computer instructions are run on the cross-system information processing apparatus and the electronic device, the cross-system file processing apparatus and the electronic device are enabled to perform the functions or steps in the foregoing method embodiments.

An embodiment of this application further provides a computer program product. When the computer program product runs on a computer, the computer is enabled to perform the functions or steps performed by the electronic device in the foregoing method embodiments.

The cross-system file processing apparatus, the electronic device, the computer storage medium, the computer program product, or the chip provided in the embodiments is configured to perform the corresponding method provided above. Therefore, for beneficial effects that can be achieved, refer to the beneficial effects of the corresponding method provided above. Details are not described herein.

The foregoing descriptions about implementations allow a person skilled in the art to clearly understand that for the purpose of convenient and brief description, division of the foregoing functional modules is used as an example for illustration. During actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A cross-system file processing method, applied to an electronic device, wherein the electronic device comprises a first system and a second system, and the method comprises:
performing a first processing operation on a first file by using a second application, wherein the second application belongs to the second system; and
after the first processing operation is received, displaying a recently processed historical file on a first application interface, wherein the recently processed historical file comprises the first file, and a first application that corresponds to the first application interface belongs to the first system.

2. The method according to claim 1, wherein the first file comprises at least one of a picture, a video, audio, and a document.

3. The method according to claim 1 or 2, wherein after the first processing operation is received, displaying the recently processed historical file on the first application interface comprises:
after the first processing operation is received, sending, by the second system, file information of the first file to the first system in response to the first processing operation;
updating, by the first system, the file information of the first file to a file database; and
updating and displaying, by the first system, the recently processed historical file on the first application interface based on an updated file database.

4. The method according to claim 3, wherein the file database is a media library in the first system, or the file database is a registry in the first system, or the file database is a configuration file in the first system.

5. The method according to claim 3 or 4, wherein the file information comprises a file path of the first file.

6. The method according to any one of claims 3 to 5, wherein the file information comprises a file path of the first file in the second system, and updating, by the first system, the file information of the first file to the file database comprises:
performing, by the first system, path conversion on the file path of the first file in the second system, to obtain a file path of the first file in the first system through conversion; and
updating, by the first system, the file path of the first file in the first system to the file database.

7. The method according to any one of claims 3 to 6, wherein the second system comprises file monitoring and management, the first system comprises a cross-system file refresh service, and sending, by the second system, the file information of the first file to the first system in response to the first processing operation comprises:
obtaining, by the second system, the file information of the first file by using the file monitoring and management in response to the first processing operation; and
sending, by the second system, the file information of the first file to the cross-system file refresh service in the first system; and
updating, by the first system, the file information of the first file to the file database comprises:
updating, by the first system, the file information of the first file to the file database by using the cross-system file refresh service.

8. The method according to any one of claims 1 to 7, wherein after displaying the recently processed historical file on the first application interface, wherein the recently processed historical file comprises the first file, the method further comprises:
performing a second processing operation on a second file by using a third application, wherein the third application belongs to the first system; and
after the second processing operation is received, displaying a recently processed historical file on the first application interface, wherein the recently processed historical file comprises the first file and the second file.

9. The method according to any one of claims 1 to 8, wherein the first processing operation is an editing processing operation on the first file, and the editing processing operation comprises at least one of creation, modification, and saving operations.

10. The method according to any one of claims 1 to 9, wherein after displaying the recently processed historical file on the first application interface, wherein the recently processed historical file comprises the first file, the method further comprises:
displaying a content interface of the first file by using the second application in response to a trigger operation on the first file on the first application interface; or
displaying a content interface of the first file by using the first application in response to a trigger operation on the first file on the first application interface.

11. An electronic device, wherein the electronic device comprises a memory and one or more processors, the memory is coupled to the processor, the memory is configured to store computer program code, the computer program code comprises computer instructions, and when the processor executes the computer instructions, the electronic device performs the method according to any one of claims 1 to 10.

12. A chip system, wherein the chip system is applied to an electronic device, the chip system comprises one or more interface circuits and one or more processors, and the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device performs the method according to any one of claims 1 to 10.

13. A computer-readable storage medium, comprising computer instructions, wherein when the computer instructions are run on an electronic device, the electronic device is enabled to perform the method according to any one of claims 1 to 10.
